# EUROPÄISCHE PATENTSCHRIFT

(11) **EP 2 004 523 B1**
(45) Veröffentlichungstag und Bekanntmachung des Hinweises auf die Patenterteilung: **15.06.2011**
(21) Anmeldenummer: 07724113.1
(22) Anmeldetag: 10.04.2007
(51) Int. Cl.: B65G 1/14

(54) **STAPELSÄULE**
STACKING COLUMN
COLONNE D'EMPILEMENT

(30) Priorität: 13.04.2006 DE 102006017986
(43) Veröffentlichungstag der Anmeldung: 24.12.2008
(73) Patentinhaber: MTS Maschinenbau GmbH, 88512 Mengen (DE)
(72) Erfinder: STROBEL, Gustav, 88348 Saulgau (DE)
(74) Vertreter: Weiss, Peter
(86) Internationale Anmeldenummer: PCT/EP2007/003172
(87) Internationale Veröffentlichungsnummer: WO 2007/118634

(56) Entgegenhaltungen:
- WO-A-2005/012142
- WO-A-2005/056436

## Beschreibung

Die Erfindung betrifft eine Stapelsäule zum Halten von Lagergütern, insbesondere von Karosserieteilen auf Aufnahmeelementen von Klinkenhebeln, die um eine Drehachse von einer Ruhestellung in eine Arbeitsstellung drehen, wobei mehrere Klinkenhebel übereinander oder nebeneinander angeordnet sind und in Wirkverbindung stehen und mit dem Klinkenhebel ein Stützelement mitdreht, welches in Arbeitsstellung auf oder an einem vorgängigen Klinkenhebel aufsitzt oder anliegt.

### STAND DER TECHNIK

Stapelsäulen sind in vielfältiger Form und Ausführung bekannt und auf dem Markt. Meist handelt es sich dabei um senkrechte Stapelsäulen, die in einem Viereck angeordnet sind. Sie dienen der Aufnahme von Formstücken, insbesondere von Karosserieteilen, die in Pressen hergestellt werden. Derartige Stapelsäulen sind beispielsweise in der DE-OS 38 11 310 gezeigt. Es besteht jedoch auch die Möglichkeit der horizontalen Anordnung der Stapelsäulen, wie dies in der DE-OS 40 20 864 angedeutet ist.

Daneben ist aus der WO 2005/012142 A eine Stapelsäule zum Halten von Lagergütern, insbesondere von Karosserieteilen auf Aufnahmeteilen von Klinkenhebeln, die um eine Drehachse von einer Ruhestellung in eine Arbeitsstellung drehen, wobei mehrere Klinkenhebel übereinander oder nebeneinander angeordnet sind und in Wirkverbindung stehen bekannt, wobei die Besonderheit hierbei der Umstand ist, dass mit dem Klinkenhebel ein Stützelement mitdreht, welches in Arbeitsstellung auf oder an einem vorgängigen Klinkenhebel aufsitzt oder aufliegt.

Die Funktion der Stapelsäulen ist meist die gleiche. Wird das zu lagernde Werkstück in ein Gestell aus mehreren Stapelsäulen eingebracht, so schwenken die untersten Klinkenhebel bei Auflage der Formstücke in eine Arbeitsposition, wobei die Klinkenhebel jeweils einen nachfolgenden Klinkenhebel aus einer Ruhelage in eine Bereitschaftsposition mitnehmen. Das nächste einzubringende Formstück bringt den nachfolgenden Klinkenhebel aus der Bereitschaftsposition in die Arbeitsposition, in der die Klinken das Formstück halten.

Sobald das gesamte Gestell gefüllt ist, wird eine Verriegelungseinrichtung betätigt, was in den meisten Fällen manuelle geschieht und deshalb aufwendig ist. Diesen Nachteil beseitigt eine Verriegelungseinrichtung, wie sie aus der DE 200 04 711 U bekannt ist, wobei dort ein entsprechender Schieber von einem Roboter betätigt wird.

### AUFGABE

Aufgabe der vorliegenden Erfindung ist es, zum einen die Verriegelung des letzten Klinkenhebel zu verbessern und zum anderen die Wirkverbindung der einzelnen Klinkenhebel untereinander zu vereinfachen und zu stabilisieren.

### LÖSUNG DER AUFGABE

Zur Lösung der Aufgabe führt zum einen, dass in das Stützelement eine Verstärkung integriert ist.

Derartige Stützelemente sind beispielsweise in der DE 103 35 592 A gezeigt. Da in einem einfachen bevorzugten Fall zumindest ein grosser Teil des Klinkenhebels aus Kunststoff hergestellt wird, um Material und Kosten zu sparen, hat es sich als ratsam erwiesen, diese Stützelemente zu verstärken. Zu diesem Zweck sind in die Stützelemente beispielsweise Metallbolzen integriert, die in Arbeitsstellung aufeinandersitzen. Dadurch kommt es nicht zu einem Umknicken dieser Stützelemente.

Desweiteren ist daran gedacht, dem Klinkenhebel ein Schwenkelement zuzuordnen, das durch zumindest ein Kraftspeicher belastetes Element in einer Raststellung in der Arbeitsstellung haltbar ist.

In einem bevorzugten Ausführungsbeispiel der Erfindung greift dieses Schwenkelement mit einem Finger in eine Ausnehmung eines kraftspeicherbelasteten Schiebers ein und fährt beim Schwenken entlang einem Rand der Ausnehmung, bevor es in eine Rastausnehmung eingleitet. In dieser Rastausnehmung ist der Finger dann festgelegt und wird erst dann wieder gelöst, wenn der Schieber gegen die Kraft des Kraftspeichers bewegt wird.

Zur Verbesserung der Führung des Fingers ist vorgesehen, dass dieser durch einen Spalt zwischen einem Führungsstreifen und dem oben erwähnten Rand der Ausnehmung hindurchgleiten muss.

In einem anderen Ausführungsbeispiel der Erfindung wirkt der Finger mit einem federbelasteten Schwenkhebel und einem federbelasteten Schliesser zusammen. Beide halten zwischen sich den Finger, der erst durch Bewegen des Schliessers und/oder durch Bewegen des Schwenkhebels freigegeben wird.

Besonders einfach wird die Wirkverbindung für die Bewegung der einzelnen Klinkenhebel realisiert. Hierzu ist vorgesehen, dass von einem nachfolgenden Klinkenhebel ein Bein mit einem Fuss abragt an dem ein Mitnehmer des jeweils darunter liegenden Klinkenhebels anliegt, wobei das Bein um die Drehachse des Klinkenhebels dreht und die Wirkverbindung zwischen Mitnehmer und Fuss exzentrisch dazu angeordnet ist. Das bedeutet, dass der Mitnehmer des darunter liegenden Klinkenhebels beim Drehen dieses Klinkenhebels um seine Drehachse den darüber liegenden Fuss mitnimmt, so dass der dem Fuss zugeordnete Klinkenhebel ebenfalls um seine Drehachse gedreht wird.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer erfindungsgemässen Stapelsäule mit einigen integrierten Klinkenhebeln;
Figur 2 eine vergrössert dargestellte Seitenansicht der Stapelsäule gemäss Figur 1;
Figur 3 eine Frontansicht der Stapelsäule gemäss Figur 2;
Figur 4 eine perspektivische Ansicht eines erfindungsgemässen Schwenkteils für einen Klinkenhebel;
Figur 5 eine perspektivische Ansicht einer Mehrzahl von Klinkenhebel in einer gewünschten Wirkverbindung;
Figur 6 eine vergrössert dargestellte Seitenansicht auf einen Teilbereich der Stapelsäule gemäss Figur 2;
Figur 7 eine vergrössert dargestellte Seitenansicht des Teils der Stapelsäule gemäss Figur 6 in einer weiteren Gebrauchslage;
Figur 8 eine Seitenansicht eines Teilbereichs eines weiteren Ausführungsbeispiels einer Stapelsäule;
Figur 9 eine Draufsicht auf den Teilbereich der Stapelsäule gemäss Figur 8 in einer weiteren Gebrauchslage;
Figur 10 eine perspektivische Ansicht des Teilbereichs der Stapelsäule gemäss Figur 9.

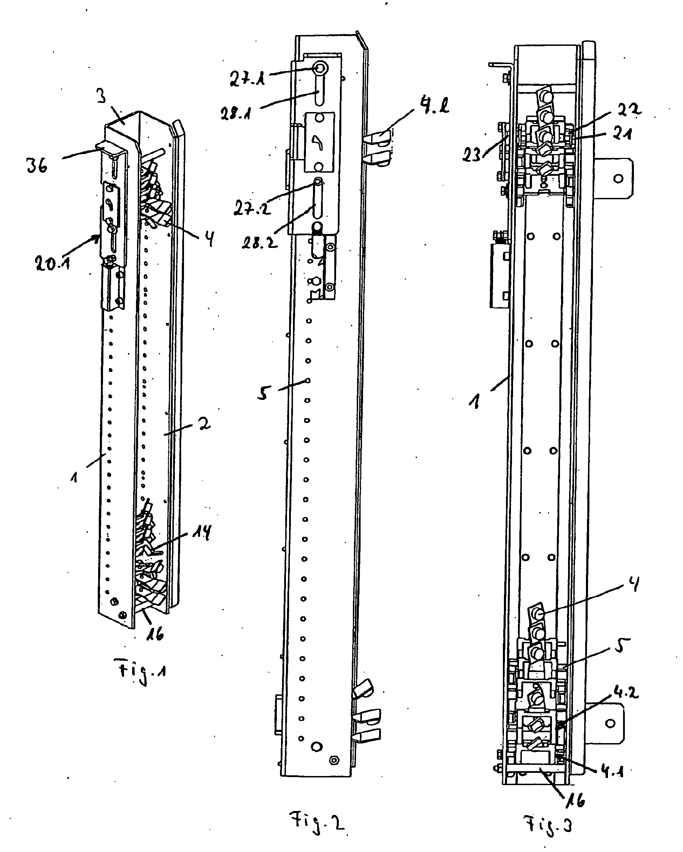

Eine erfindungsgemässe Stapelsäule weist gemäss den Figuren 1 bis 3 zwei Seitenwangen 1 und 2 auf, die durch eine Rückwand 3 miteinander verbunden sind. Zwischen den beiden Seitenwangen 1 und 2 befinden sich eine Vielzahl von Klinkenhebeln 4, wobei jeder Klinkenhebel 4 um eine Drehachse 5 dreht.

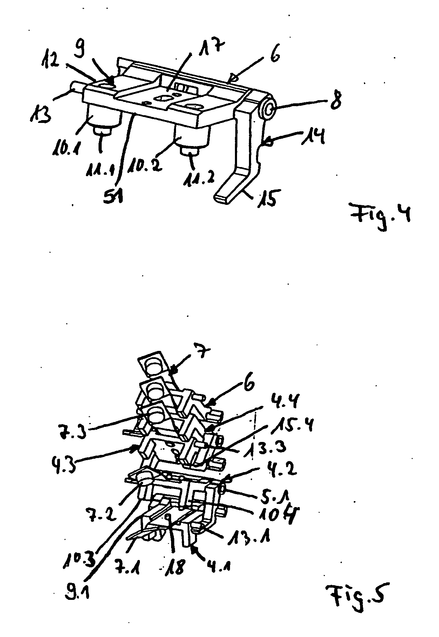

Jeder Klinkenhebel 4 besteht in einem bevorzugten Ausführungsbeispiel aus einem Schwenkteil 6 aus Kunststoff, wie es in Figur 4 gezeigt ist. An dieses Schwenkteil 6 kann ein Aufnahmeelement 7, bevorzugt aus Metall und in beliebiger Ausgestaltung, wie in Figur 5 angedeutet, angebracht werden.

Das Schwenkteil 6 weist eine zylindrische Aufnahme 8 für die Drehachse 5 auf. Diese Aufnahme 8 befindet sich einends eines Grundkörpers 9 des Schwenkteils 6. Der Grundkörper 9 ist plattenförmig ausgestaltet, wobei bevorzugt von einer Unterseite 51 des Grundkörpers zwei Stützelemente 10.1 und 10.2 nach unten abragen. In diesen Stützelementen 10.1 und 10.2 sind metallische Verstärkungen 11.1 und 11.2 integriert. Dabei kann es sich um einfache metallische Bolzen handeln.

Etwa parallel zu der Aufnahme 8 ragt von einer Stirnkante 12 des Grundkörpers 9 ein stiftförmiger Mitnehmer 13 ab, der mit einem Bein 14 eines nachfolgenden Klinkenhebels zusammenwirkt. Dieses Bein 14 ragt von der Aufnahme 8 des vorherigen Klinkenhebels 4 ab und dreht somit ebenfalls um die Drehachse 5. An seinem freien Ende besitzt das Bein 14 einen Fuss 15, welcher in einem fast rechten Winkel abgebogen ist.

Die Funktionsweise dieser Klinkenhebelanordnung wird anhand von Figur 5 näher beschrieben: Der unterste Klinkenhebel 4.1 befindet sich in Arbeitsstellung, d.h., auf seinem Aufnahmeelement 7.1 ist bereits ein nicht näher gezeigtes Formstück aufgelegt. Bei seinem Schwenken in diese Arbeitsstellung hat jedoch der Klinkenhebel 4.1 mit dem Mitnehmer 13.1 den darauffolgenden Klinkenhebel 4.2 in Bereitschaftsstellung gebracht, d.h., das Aufnahmeelement 7.2 wurde bereits um die Drehachse 5.1 soweit gedreht, dass es aus den Seitenwangen 1 und 2 herausschaut und zur Auflage eines nächsten Formkörpers bereit ist. Wird dieser Formkörper auf das Aufnahmeelement 7.2 aufgelegt, so dreht dieses weiter um die Drehachse 5.1 in die für den Klinkehebel 4.1 gezeigte Arbeitsstellung, wobei die Stützelemente 10.3 bzw. 10.4, die hier in einer rechteckigen Ausführungsform gezeigt sind, dem Grundkörper 9.1 des Klinkenhebels 4.1 aufsitzen. Dies geschieht bevorzugt ziemlich exakt über den entsprechenden Stützelementen des Klinkenhebels 4.1, so dass eine Kraftübertragung von Klinkenhebel zu Klinkenhebel nach unten weitergeleitet wird. Diese Kraft wird im wesentlichen von den Verstärkungen 11.1 und 11.2 aufgefangen, wobei diese Verstärkungen von aufeinanderfolgenden Klinkenhebeln aufeinander aufsitzen. Dementsprechend ist es ratsam, dass die Stützelemente des untersten Klinkenhebels 4.1 auf einer festen Grundlage, beispielsweise auf einem in Figur 3 gezeigten Querbolzen 16 aufstehen.

Der dritte Klinkenhebel 4.3 befindet sich gemäss Figur 5 in Ruhestellung, d.h., sein Aufnahmeelement 7.3 liegt zwischen den beiden Seitenwangen 1 und 2. Er stört somit nicht beim Auflegen des Formkörpers auf das Aufnahmeelement 7.2, wenn die Stapelsäulen beispielsweise sich gegenüberliegend oder an vier Ecken eines Stapelsäulengestells angeordnet sind. Gleichzeitig ist erkennbar, dass der Mitnehmer 13.3 dieses dritten Klinkenhebels 4.3 ein Abstand von einem Fuss 15.4 eines vierten Klinkenhebels 4.4 einhält. Dies bedeutet, so dass dieser vierte Klinkenhebel 4.4 erst dann um seine Drehachse bewegt wird, wenn der dritte Klinkenhebel 4.3 in Arbeitsstellung gebracht wird, d.h., dass der Mitnehmer 13.3 des Klinkenhebels 4.3 mit dem Fuss 15.4 des Klinkenhebels 4.4 in Wirkverbindung gelangt. Dieser Abstand bewirkt den Unterschied zwischen Ruhestellung, Bereitschaftsstellung und Arbeitsstellung.

Der Grundkörper 9 weist im übrigen einen Aufnahmekanal 17 für das Aufnahmeelement 7 auf, wobei das Aufnahmeelement 7 über entsprechende Nieten 18 mit dem Grundkörper 9 verbunden ist.

Bevorzugt dem letzten Klinkenhebel 4.1 soll eine Verriegelungseinrichtung 20 zugeordnet sein, durch welche der letzte Klinkenhebel 4.I und mit ihm sämtliche vorangegangenen Klinkenhebel 4 verriegelt werden kann/können. Hierzu ist dem letzten Klinkenhebel 4.I ein Schwenkelement zugeordnet, das durch zumindest ein durch einen Kraftspeicher belastetes Element in einer Raststellung in der Arbeitsstellung haltbar ist. Dazu bestehen gemäss der vorliegenden Erfindung zwei Ausführungsbeispiele.

In einem ersten Ausführungsbeispiel gemäss den Figuren 1 bis 7 ist einem Schwenkteil 6 statt dem Aufnahmeelement 7 ein Querbügel 21 mit einem Querbolzen 22 aufgesetzt, welcher in seiner Verlängerung mit einem Finger 23 sowohl eine Ausnehmung 24 in der Seitenwange 1.1 als auch eine Ausnehmung 25 in einem Schieber 26 durchgreift. Dieser Schieber 26 liegt auf der Aussenfläche der Seitenwange 1.1 auf und ist entlang dieser gegen die Kraft einer Schraubenfeder 29 verschiebbar bewegbar. Er wird dabei durch entsprechende Schraubenbolzen 27.1 und 27.2 geführt, welche entsprechende Langlöcher 28.1 und 28.2 durchgreifen.

Im Bereich der Ausnehmungen 24 und 25 ist auf die Seitenwange 1.1 eine Platte 30 aufgesetzt, von der aus ein Führungsstreifen 31 in die lichte Weite der Schieberausnehmung 25 einragt. Dabei bildet dieser Führungsstreifen 31 mit einem Rand 32 der Schieberausnehmung 25 einen Spalt 33.

Die Funktionsweise der vorliegenden Erfindung ist folgende:

Sobald der letzte Klinkenhebel 4.I.1 betätigt wird, nimmt er mit seinem Mitnehmer das Schwenkteil 6 mit, an dem sich der Querbügel 21 befindet.

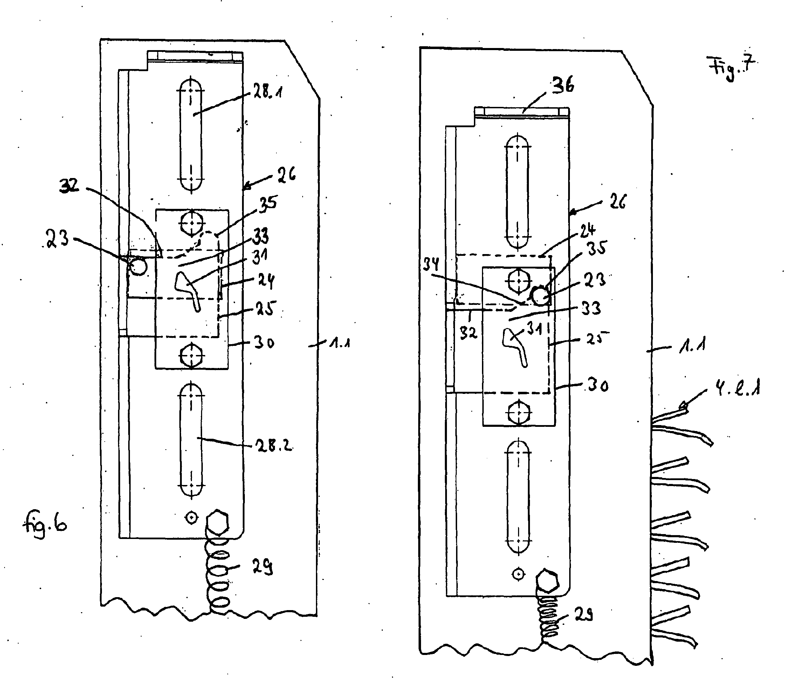

Dadurch wird aber auch der Querbolzen 22 um die Drehachse 5 des Schwenkteils 6 herum bewegt, wobei der Finger 23 in der Ausnehmung 24 der Seitenwange 1.1 eine Bogenbewegung durchläuft. Der Finger 23 drückt dabei gegen den Rand 32 der Schieberausnehmung 25 und bewegt den Schieber 26 gegen die Kraft der Schraubenfeder 29 ein geringes Stück nach oben. Gegen Ende des Randes 32 läuft der Finger 23 eine Schräge 34 ab und fällt dann in eine Rastausnehmung 35 bzw. wird von der Rastausnehmung 35 aufgenommen, wenn der Schieber 26 von der Schraubenfeder 29 nach unten gezogen wird. Damit sind nicht nur das Schwenkteil 6 sondern auch sämtliche Klinkenhebel 4 festgelegt. Sollen diese Klinkenhebel 4 und auch das Schwenkteil 6 gelöst werden, muss an einer Querlasche 36 des Schiebers 26 entgegen der Kraft der Schraubenfeder 29 gezogen werden, so dass der Finger 23 aus der Rastausnehmung 35 freigegeben wird und durch den Spalt 33 in seine in Figur 6 gezeigte Ausgangslage zurück gelangen kann.

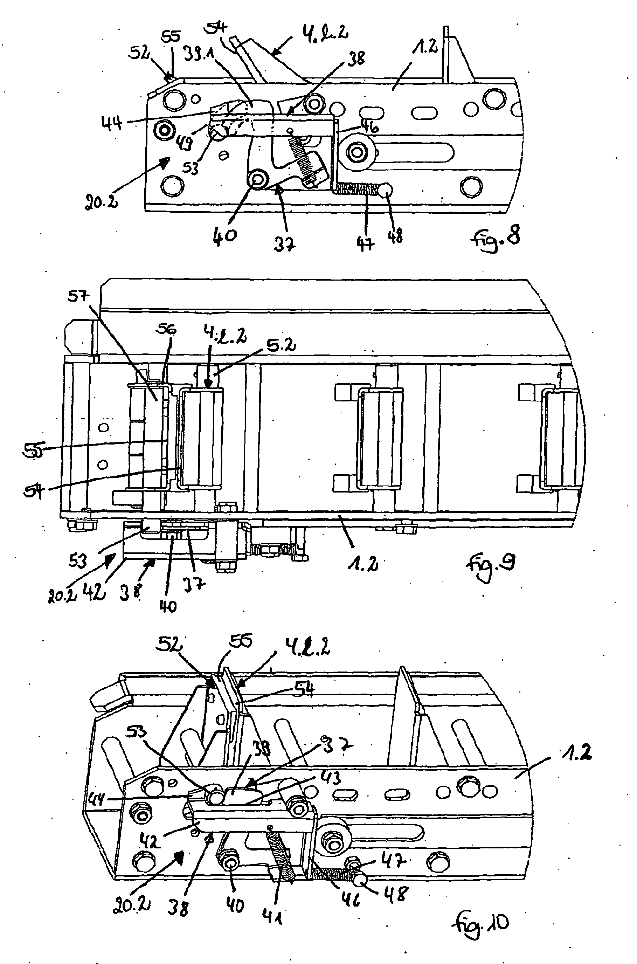

In einer weiteren Ausführungsform gemäss den Figuren 8 bis 10 ist dem letzten Klinkenhebel 4.I.2 eine Verriegelungsklinke 52 zugeordnet. Diese Verriegelungsklinke 52 weist ebenfalls einen Querbügel 56 mit einem Querbolzen 57 auf, welcher in seiner Verlängerung einen Finger 53 ausbildet, welcher in einem vor allem in Figur 8 erkennbaren, gekrümmten Langloch 49 in der Seitenwange 1.2 führbar ist. Der Finger 53 wird auf der Aussenseite der Seitenwange 1.2 von einem Schwenkhebel 37 und einem Schliesser 38 gehalten. Der Schwenkhebel 37 ist kniehebelförmig ausgebildet, wobei seine Drehachse 40 in der Höhe des Knies liegt. An seinem freien Ende ist er über eine Schraubenfeder 41 mit dem Schliesser 38 verbunden. In Haltelage liegt der Schwenkhebel 37 mit einem Hammerkopf 39 dem Finger 53 an.

Der Schliesser 38 übergreift in Haltelage mit einem Profilstreifen 42 den Hammerkopf 39 und den Finger 53, wobei dieser Finger 53 in einer Randausnehmung 43 eines Profilstreifens 42 des Schliessers 38 aufgenommen ist. Ein entsprechender Winkelstreifen 44 an dem Profilstreifen 42 bildet ein Widerlager zu dem Hammerkopf 39 des Schwenkhebels 37.

Der Profilstreifen 42 ist zusammen mit dem Schwenkhebel 37 der Drehachse 50 angeordnet, wobei der Profilstreifen 42 zwischen Seitenwange 12 und dem Schwenkhebel 37 angeordnet ist. Von dem Profilstreifen 42 ragt einends ein Verbindungsstreifen 46 ab, der über eine weitere Schraubenfeder 47 mit einem Festpunkt 48 an der Seitenwange 1.2 verbunden ist.

Die Funktionsweise der vorliegenden Erfindung ist folgende:

Beim Drehen des letzten Klinkenhebels 4.I.2 um seine Drehachse 5.2 wird die Verriegelungsklinke 53 entsprechend den bereits oben genannten Bewegungsabläufen mitbewegt. D.h., der Finger 53 bewegt sich in dem Langloch 49 in der Seitenwange 1.2. Dabei drückt der Finger 53 zwischen den Winkelstreifen 44 und den Hammerkopf 39, die sich öffnen und zwischen sich diesen Finger 53 aufnehmen. Durch den Winkelstreifen 44 ist der Finger 53 nunmehr gegen ein Zurückfallen gesichert. Gleichzeitig kommt der Klinkenhebel 4.1.2 mit seiner Oberfläche 54 gegen eine Auflagefläche 55 der Verriegelungsklinke 53 zu liegen und wird so daran gehindert, in seine Ruhestellung zurückzufallen.

Zum Freigeben des Fingers 53 wird der Profilstreifen 42 angehoben, wobei gleichzeitig ein erhöhter Zug über die Schraubenfeder 41 auf den Schwenkhebel 37 übertragen wird, welche den Finger 53 in seine Ausgangslage zurückdrückt. Das Anheben des Profilstreifens 42 kann manuell oder automatisch durch eine nicht näher gezeigte Entriegelungsstange erfolgen.

### Bezugszeichenliste

| | | | | | |
|---|---|---|---|---|---|
| 1 | Seitenwange | 34 | Schräge | 67 | |
| 2 | Seitenwange | 35 | Rastausnehmung | 68 | |
| 3 | Rückwand | 36 | Querlasche | 69 | |
| 4 | Klinkenhebel | 37 | Schwenkhebel | 70 | |
| 5 | Drehachse | 38 | Schliesser | 71 | |
| 6 | Schwenkteil | 39 | Hammerkopf | 72 | |
| 7 | Aufnahmeelement | 40 | Drehachsen | 73 | |
| 8 | Aufnahme | 41 | Schraubenfeder | 74 | |
| 9 | Grundkörper | 42 | Profilstreifen | 75 | |
| 10 | Stützelement | 43 | Randausnehmung | 76 | |
| 11 | Verstärkung | 44 | Winkelstreifen | 77 | |
| 12 | Stirnkante | 45 | Drehachse | 78 | |
| 13 | Mitnehmer | 46 | Verbindungsstreifen | 79 | |
| 14 | Bein | 47 | Schraubenfeder | | |
| 15 | Fuss | 48 | Festpunkt | | |
| 16 | Querbolzen | 49 | Langloch | | |
| 17 | Aufnahmekanal | 50 | Kehle | | |
| 18 | Niet | 51 | Unterseite | | |
| 19 | | 52 | Verriegelungsklinke | | |
| 20 | Verriegelungseinrichtung | 53 | Finger | | |
| 21 | Querbügel | 54 | Oberseite | | |
| 22 | Querbolzen | 55 | Auflagefläche | | |
| 23 | Finger | 56 | Querbügel | | |
| 24 | Ausnehmung | 57 | Querbolzen | | |
| 25 | Ausnehmung | 58 | | | |
| 26 | Schieber | 59 | | | |
| 27 | Schraubenbolzen | 60 | | | |
| 28 | Langloch | 61 | | | |
| 29 | Schraubenfeder | 62 | | | |
| 30 | Platte | 63 | | | |
| 31 | Führungsstreifen | 64 | | | |
| 32 | Rand | 65 | | | |
| 33 | Spalt | 66 | | | |

## Patentansprüche

1. Stapelsäule zum Halten von Lagergütern, insbesondere von Karosserieteilen auf Aufnahmeelementen (7, 7.1 bis 7.3) von Klinkenhebeln (4, 4.1, 4.2, 4.3, 4.4, 4.1, 4.I.1, 4.1.2), die um eine Drehachse (5, 5.1, 5.2) von einer Ruhestellung in eine Arbeitsstellung drehen, wobei mehrere Klinkenhebel (4, 4.1, 4.2, 4.3, 4.4, 4.1, 4.I.1, 4.1.2) übereinander oder nebeneinander angeordnet sind und in Wirkverbindung stehen und mit dem Klinkenhebel (4, 4.1, 4.2, 4.3, 4.4, 4.1, 4.I.1, 4.1.2) ein Stützelement (10.1 bis 10.4) mitdreht, welches in Arbeitsstellung auf oder an einem vorgängigen Klinkenhebel (4, 4.1, 4.2, 4.3, 4.4) aufsitzt oder anliegt,
**dadurch gekennzeichnet,**
**dass** in das Stützelement (10.1 bis 10.4) eine Verstärkung (11.1, 11.2) integriert ist.

2. Stapelsäule nach Anspruch 1, **dadurch gekennzeichnet, dass** von dem jeweils nachfolgenden Klinkenhebel (4, 4.1, 4.2, 4.3, 4.4, 4.1, 4.I.1, 4.1.2) ein Bein (14) mit einem Fuss (15, 15.4) abragt, an dem ein Mitnehmer (13, 13.1, 13.3) des jeweils darunter liegenden Klinkenhebels (4, 4.1, 4.2, 4.3, 4.4, 4.I, 4.I.1, 4.I.2) anliegt, wobei das Bein (14) um die Drehachse (5, 5.1, 5.2) dreht und die Wirkverbindung zwischen Mitnehmer (13, 13.1, 13.3) und Fuss (15, 15.14) exzentrisch dazu angeordnet ist.

3. Stapelsäule nach Anspruch 1 oder 2, **dadurch gekennzeichnet, dass** dem Klinkenhebel (4.1, 4.I.1, 4.I.2) ein Schwenkelement zugeordnet ist, das durch zumindest ein Kraftspeicher belastetes Element (26, 37, 38) in einer Raststellung in der Arbeitsstellung haltbar ist.

4. Stapelsäule nach einem der Ansprüche 1 bis 3, **dadurch gekennzeichnet, dass** der Klinkenhebel (4, 4.1, 4.2, 4.3, 4.4, 4.1, 4.I.1, 4.I.2) aus einem Schwenkteil (6) aus Kunststoff und dem Aufnahmeelement (7, 7.1 bis 7.3), gegebenenfalls mit Klemmstreifen, aus einem anderen Werkstoff, insbesondere aus Metall besteht, die bspw. über Nieten (18) miteinander verbunden sind.

5. Stapelsäule nach wenigstens einem der Ansprüche 1 bis 4, **dadurch gekennzeichnet, dass** das Schwenkelement mit einem Finger (23) in eine Ausnehmung (25) eines kraftspeicherbelasteten Schiebers (16) eingreift und beim Schwenken entlang einem Rand (32) der Ausnehmung (25) gleitet und in eine Rastausnehmung (35) einfährt.

6. Stapelsäule nach Anspruch 5, **dadurch gekennzeichnet, dass** in die lichte Weite der Ausnehmung (25) ein Führungsstreifen (31) eingreift, der mit dem Rand (32) der Ausnehmung (25) einen Spalt (33) ausbildet, durch den der Finger (23) beim Schwenken des Schwenkhebels hindurchgleitet.

7. Stapelsäule nach wenigstens einem der Ansprüche 1 bis 4, **dadurch gekennzeichnet, dass** das Schwenkelement mit einem Finger (53) zwischen einem federbelasteten Schwenkhebel (37) und einem mit diesem zusammenwirkenden Schliesser (38) eingreift.

8. Stapelsäule nach Anspruch 7, **dadurch gekennzeichnet, dass** der Schliesser (38) ebenfalls federbelastet ist.

9. Stapelsäule nach wenigstens einem der Ansprüche 1 bis 8, **dadurch gekennzeichnet, dass** die Klinkenhebel 4, (4.1, 4.2, 4.3, 4.4, 4.I, 4.1.1, 4.1.2) zwischen zwei Seitenwangen (1, 2, 1.1, 1.2) angeordnet sind und sich der Schieber (38) bzw. Schwenkhebel (37) und Schliesser (38) auf einer Aussenfläche der einen Seitenwange (1.2) befindet.

10. Stapelsäule nach Anspruch 9, **dadurch gekennzeichnet, dass** der Finger (53) des Schwenkelementes ein Langloch (49) in der Seitenwange (1.2) durchgreift, bevor er in die Ausnehmung (43) in dem Schieber (38) bzw. zwischen Schliesser (38) und Schwenkhebel (37) eingreift.

11. Stapelsäule nach wenigstens einem der Ansprüche 1 bis 10, **dadurch gekennzeichnet, dass** an dem Schieber (38) bzw. Schliesser (38) und/oder Schwenkhebel (37) eine Zugfeder (41, 47) angeordnet ist/sind.

## Claims

1. A stacking column for holding stored articles, in particular vehicle body parts, on receiving elements (7, 7.1 to 7.3) of ratchet levers (4, 4.1, 4.2, 4.3, 4.4, 4.1, 4.1.1, 4.1.2) which rotate about an axis of rotation (5, 5.1, 5.2) from an inoperative position into an operating position, with a plurality of ratchet levers (4, 4.1, 4.2, 4.3, 4.4, 4.1, 4.1.1, 4.1.2) being arranged one above the other or next to each other and being in an operative connection and a supporting element (10.1 to 10.4) jointly rotating with the ratchet lever (4, 4.1, 4.2, 4.3, 4.4, 4.1, 4.1.1, 4.1.2), which element in the operating position is seated on or lies against a preceding ratchet lever (4, 4.1, 4.2, 4.3, 4.4), **characterised in that** a reinforcement (11.1, 11.2) is integrated in the supporting element (10.1 to 10.4).

2. A stacking column according to Claim 1, **characterised in that** a leg (14) with a foot (15, 15.4) projects away from the respective subsequent ratchet lever (4, 4.1, 4.2, 4.3, 4.4, 4.1, 4.1.1, 4.1.2), on which foot a dog (13, 13.1, 13.3) of the respective ratchet lever (4, 4.1, 4.2, 4.3, 4.4, 4.1, 4.1.1, 4.1.2) lying underneath it lies, the leg (14) rotating about the axis of rotation (5, 5.1, 5.2) and the operative connection between the dog (13, 13.1, 13.3) and foot (15, 15.14) being arranged eccentrically thereto.

3. A stacking column according to Claim 1 or 2, **characterised in that** a pivoting element is associated with the ratchet lever (4.1, 4.1.1, 4.1.2), which element can be held in a detent position in the operating position by at least one element (26, 37, 38) loaded energy store.

4. A stacking column according to one of Claims 1 to 3, **characterised in that** the ratchet lever (4, 4.1, 4.2, 4.3, 4.4, 4.1, 4.1.1, 4.1.2) consists of a pivoting part (6) made from plastics material and the receiving element (7, 7.1 to 7.3), optionally with clamping strip, made from a different material, in particular metal, which are joined together for example via rivets (18).

5. A stacking column according to at least one of Claims 1 to 4, **characterised in that** the pivoting element engages with a finger (23) in a cutout (25) in a slider (16) which is loaded by an energy store, and upon pivoting slides along an edge (32) of the cutout (25) and moves into a detent cutout (35).

6. A stacking column according to Claim 5, **characterised in that** a guide strip (31) engages in the internal width of the cutout (25), which strip forms with the edge (32) of the cutout (25) a gap (33) through which the finger (23) slides upon pivoting of the pivoting lever.

7. A stacking column according to at least one of Claims 1 to 4, **characterised in that** the pivoting element engages with a finger (53) between a spring-loaded pivoting lever (37) and a closer (38) which cooperates therewith.

8. A stacking column according to Claim 7, **characterised in that** the closer (38) is likewise spring-loaded.

9. A stacking column according to at least one of Claims 1 to 8, **characterised in that** the ratchet levers 4, (4.1, 4.2, 4.3, 4.4, 4.1, 4.1.1, 4.1.2) are arranged between two side cheeks (1, 2, 1.1, 1.2) and the slider (38) or pivoting lever (37) and closer (38) are located on an outer surface of the one side cheek (1.2).

10. A stacking column according to Claim 9, **characterised in that** the finger (53) of the pivoting element engages through an elongate hole (49) in the side cheek (1.2) before engaging in the cutout (43) in the slider (38) or between the closer (38) and the pivoting lever (37).

11. A stacking column according to at least one of Claims 1 to 10, **characterised in that** a tension spring (41, 47) is/are arranged on the slider (38) or closer (38) and/or pivoting lever (37).

## Revendications

1. Colonne d'empilement pour maintenir des produits à stocker, en particulier des pièces de carrosserie, sur des éléments de réception (7, 7.1 à 7.3) de leviers à poignées (4, 4.1, 4.2, 4.3, 4.4, 4.1, 4.I.1, 4.I.2) tournant autour d'un axe de rotation (5, 5.1, 5.2) d'une position de repos en une position de travail, plusieurs leviers à poignées (4, 4.1, 4.2, 4.3, 4.4, 4.I, 4.I.1, 4.I.2) étant disposés l'un au-dessus ou à côté de l'autre et étant en liaison de fonctionnement l'un avec l'autre et avec le levier à poignée (4, 4.1, 4.2, 4.3, 4.4, 4.1, 4.I.1, 4.1.2) tournant un élément d'appui (10.1 à 10.4) qui, en position de travail, se trouve sur ou s'appuie contre un levier à poignée précédent (4, 4.1, 4.2, 4.3, 4.4),
**caractérisée par le fait**
**que** dans l'élément d'appui i (10.1 à 10.4) est intégré un renforcement (11.1. 11.2).

2. Colonne d'empilement selon la revendication 1, **caractérisée par le fait que** du levier à poignée suivant respectif (4, 4.1, 4.2, 4.3, 4.4, 4.1, 4.I.1, 4.I.2) fait saillie une jambe (14) avec un pied (15, 15.4) contre lequel s'appuie un toc d'entraînement (13, 13.1, 13.3) du levier à poignée (4, 4.1, 4.2, 4.3, 4.4, 4.I, 4.I.1, 4..I.2) respectif situé au-dessous, lajambe (14) tournant autour de l'axe de rotation (5, 5.1, 5.2) et la liaison de fonctionnement entre le toc d'entraînement (13, 13.1, 13.3) et le pied (15, 15.14) étant située de manière excentrique par rapport à cette dernière

3. Colonne d'empilement selon la revendication 1 ou 2, **caractérisée par le fait qu'**au levier à poignée (4.1, 4.I.1, 4.1.2) est associé un élément de pivotement pouvant être maintenu, par au moins un élément (26, 37, 38) soumis à un accumulateur de force en position encliquetée, en position de travail.

4. Colonne d'empilement selon l'une des revendications 1 à 3, **caractérisée par le fait que** le levier à poignée (4, 4.1, 4.2, 4.3, 4.4, 4..I, 4.I.1, 4.1.2) est constitué d'un élément de pivotement (6) en matière plastique et de l'élément de réception (7, 7.1 à 7.3), éventuellement avec des bandes de serrage, en un autre matériau, en particulier en métal, lesquels sont assemblés l'un à l'autre, par exemple par l'intermédiaire de rivets (18).

5. Colonne d'empilement selon l'une des revendications 1 à 4, **caractérisée par le fait que** l'élément de pivotement s'engage par un doigt (23) dans un évidement (25) dans un curseur soumis à un accumulateur de force (16) et glisse, lors du pivotement, le long d'un bord (32) de l'évidement (25) et pénètre dans un évidement d'encliquetage (35).

6. Colonne d'empilement selon la revendication 5, **caractérisée par le fait que** dans le diamètre nominal de l'évidement (25) s'engage une bande de guidage (31) formant, avec le bord (32) de l'évidement (25), un interstice (33) à travers lequel glisse le doigt (23) lors du pivotement du levier à poignée.

7. Colonne d'empilement selon au moins l'une des revendications 1 à 4, **caractérisée par le fait que** l'élément de pivotement s'engage par un doigt (53) entre un levier de pivotement (37) soumis à un ressort et un obturateur (38) coopérant avec ce dernier.

8. Colonne d'empilement selon la revendication 7, **caractérisée par le fait que** l'obturateur (38) est également soumis à un ressort.

9. Colonne d'empilement selon au moins l'une des revendications 1 à 8, **caractérisée par le fait que** les leviers à poignée 4, (4.1, 4.2, 4.3, 4.4, 4.1, 4.I.1, 4.1.2) sont disposés entre deux joues latérales (1, 2, 1.1, 1.2) et que l'obturateur (38), ou le levier de pivotement (37) et l'obturateur (38), se trouve sur une face extérieure de l'une des joues latérales (1.2).

10. Colonne d'empilement selon la revendication 9, **caractérisée par le fait que** le doigt (53) de l'élément de pivotement traverse un trou oblong (49) dans la joue latérale (1.2), avant de s'engager dans l'évidement (43) dans l'obturateur (38) ou l'obturateur (38) et le levier de pivotement (37).

11. Colonne d'empilement selon au moins l'une des revendications 1 à 10, **caractérisée par le fait qu'**à l'obturateur (38) ou l'obturateur (38) et/ou au levier de pivotement (37) est ou sont disposés un ou des ressorts de traction (41, 47).
